# EUROPEAN PATENT APPLICATION

(11) **EP 1 182 607 A1**
(43) Date of publication of application: **27.02.2002**
(21) Application number: 00118586.7
(22) Date of filing: 26.08.2000
(51) Int. Cl.: G06K 15/00, B41J 29/00, G06F 3/12

(54) **Method and device for improving image quality when printing on a media and related media profile**

(71) Applicant: Hewlett-Packard Company, A Delaware Corporation, Palo Alto, CA 94304 (US)
(72) Inventor: Castelltort, Sebastia, Igualada, Barcelona (ES); Such, Alberto, 08011 Barcelona (ES); Guerrero, Francisco, San Cugat del Valles, 08190 Barcelona (ES)
(74) Representative: Orsi, Alessandro

(57) **Abstract**

A method to improve image quality in a printing device by storing in a memory of the printer at least a medium definition for a first medium, in a format which structures data about said first medium; and using the data contained in said medium definition when printing onto said first media. A downloadable media profile (210) for a first medium contains values for a plurality of parameters. A printing device comprises the downloaded media profile (210), firmware components (230) for managing the printing process, passing means (250), responsive to said firmware components (230), for passing data from said profile (210) to said firmware components (230) when printing on said first media.

## Description

The present invention relates to printing devices, and particularly although not exclusively to a method and apparatus for improving image quality when printing on media.

Inkjet printing mechanisms may be used in a variety of different printing devices, such as plotters, facsimile machines or inkjet printers. Such printing devices print images using a colorant, referred to generally herein as "ink". These inkjet printing mechanisms use inkjet cartridges, often called "pens," to shoot drops of ink onto a page or sheet of print media. Some inkjet print mechanisms carry an ink cartridge with an entire supply of ink back and forth across the sheet. Other inkjet print mechanisms, known as "off-axis" systems, propel only a small ink supply with the printhead carriage across the printzone, and store the main ink supply in a stationary reservoir, which is located "off-axis" from the path of printhead travel. Typically, a flexible conduit or tubing is used to convey the ink from the off-axis main reservoir to the printhead cartridge. In multi-color cartridges, several printheads and reservoirs are combined into a single unit, with each reservoir/printhead combination for a given color also being referred to herein as a "pen".

Each pen has a printhead that includes very small nozzles through which the ink drops are fired. The particular ink ejection mechanism within the printhead may take on a variety of different forms known to those skilled in the art, such as those using piezo-electric or thermal printhead technology. For instance, two earlier thermal ink ejection mechanisms are shown in U.S. Patent Nos. 5,278,584 and 4,683,481, both assigned to the present assignee, Hewlett-Packard Company. In a thermal system, a barrier layer containing ink channels and vaporisation chambers is located between a nozzle orifice plate and a substrate layer. This substrate layer typically contains linear arrays of heater elements, such as resistors, which are energised to heat ink within the vaporisation chambers. Upon heating, an ink droplet is ejected from a nozzle associated with the energised resistor.

To print an image, the printhead is scanned back and forth across a printzone above the sheet, with the pen shooting drops of ink as it moves. By selectively energising the resistors as the printhead moves across the sheet, the ink is expelled in a pattern on the print media to form a desired image (e.g., picture, chart or text). The nozzles are typically arranged in one or more linear arrays. If more than one, the two linear arrays are located side-by-side on the printhead, parallel to one another, and substantially perpendicular to the scanning direction. Thus, the length of the nozzle arrays defines a print swath or band. That is, if all the nozzles of one array were continually fired as the printhead made one complete traverse through the printzone, a band or swath of ink would appear on the sheet. The height of this band is known as the "swath height" of the pen, the maximum pattern of ink which can be laid down in a single pass.

To achieve the maximum output quality on a particular medium some know technique are employed. Some components or parameters of a printer are used to decide when a drop of a particular ink has to be placed in a specific position on the media. Print modes, print masks, color maps, halftoning etc. are vital components of a printer to improve image quality of the output and for each media each or most of such components is accurately tuned.

Traditionally, such set of components or parameters is stored within the printer as part of the firmware. Furthermore, the media data is split in the firmware into different modules (e.g. print modes in writing system modules color maps in PostScript ® interpreter, etc). This means that in case a new medium is going be supported by the printer, the manufacturer of the printer is required (i) to release a new version of the firmware, to add all the parameters for the new media - a very time consuming (and costly) activity due to the fact that the different parameters are spread all over the code; or (ii) to just select from the embedded print modes of the printer the one that fit best (no tuning is possible without changing the firmware), but all the other media dependent parameters could not be changed.

In case of new media it is also possible that an external RIP (Raster Image Processor), has already defined printmodes specifically designed for such new medium and that can be temporarily added to the printer. Clearly, this will help just users for the printer having this particular external RIP, not the users of the printer with no RIP or having different RIPs not handling such a new medium.

The present invention seek to provide and improved system and method for improving image quality when printing on any media.

According to one aspect of the present application it is provided a method to improve image quality in a printing device, having a plurality of firmware components, comprising the steps of storing in a memory means of the printing device at least a medium definition corresponding to a first medium, in a format which structures data about said first medium; using the data contained in said medium definition corresponding to said first media when printing onto said first media.

The fact that all the data relative to the media dependent parameters has been structured in a unique profile, easily identifiable, dramatically reduce the amount of efforts necessary to define a new media for the printer firmware.

Preferably, the step of using the data, comprises the steps of, at request of a firmware component of said plurality of firmware components, parsing said data and returning the parsed data to the requesting firmware component.

The presence of a new component in the printer, capable of extracting from the profile the data relevant for each of the firmware components, allows to make "firmware-independent" the media definition. Then it avoids the need (and costs) of issuing and distributing to interested end-users new versions of the entire firmware to introduce the new media definitions in the printers already in the market.

More preferably, the medium definition contains data regarding mechanics characteristics associated to said first medium and data regarding how ink is placed on said first medium. This means that most of, or all, the parameters, once stored into different components of the firmware, now can stay together also reducing the required efforts of engineers who can independently develop and debug either the media definitions or the firmware.

Typically, said data regard one or more of the items of the following lists: print mode, print mask, ink density, color map, dry time, printing resolution.

According to a second aspect of the present invention, there is provided a downloadable media profile for a first medium containing values for a plurality of parameters characterising how a printing device prints on said first medium.

This means that any new media definitions can be easily and cheaply distributed, e.g. via the internet, as soon as they get available, e.g. as it happens with the printer drivers.

Preferably, it is downloadable by a user of the printing device into said printing device. By simplifying the installation process of the media definition, it is avoided to ask for the (costly) intervention of support engineers, as it would be required to re-install the entire firmware of the printer.

More preferably, said plurality of parameters contains data on how ink drops are placed onto said first medium. Typically the profile contains values for a plurality of parameters unrelated to the physical characteristic of said medium.

In a preferred embodiment, said list of parameters comprise one or more of the following list of parameters: print mode, print mask, color map, ink limiting threshold, dry time, resolution.

Preferably, the value for the said color map parameter identifies an independent color profile containing a color map for said media profile. This allows to use for the media definition color maps conventionally generated, thus reducing the effort for designing a media profile and at the same time allowing other components of the printer and/or an attached computer to reuse the color map as it is stored.

According to a third aspect of the present invention, there is provided a printing device comprising a displaying means, a downloaded media profile for a first medium, firmware components for managing the printing process, passing means, responsive to said firmware components for passing data from said profile to said firmware components when printing on said first media.

Preferably, the displaying means display a media identifier, comprised in said media profile, univocally identifying said downloaded media profile. This further improve the usability of the appropriate media definition by the end-user for new media.

According to a fourth aspect of the present invention, there is provided a computer readable medium, containing a downloadable media profile as claimed in any of claims 6 to 10.

For a better understanding of the invention and to show how the same may be carried into effect, there will now be described by way of example only, specific embodiments, methods and processes according to the present invention with reference to the accompanying drawings in which:
Figure 1 is a perspective view of one form of an inkjet printing mechanism, here an inkjet printer, including features in accordance to the present invention.
Figure 2 is a bloc diagram of overall system for improving image quality in accordance to the present invention.
Figure 3 is a tree diagram of a media profile.
Figure 4 is a schematic structure of a media profile.
Figure 5 is a schematic structure of the media profile of Fig. 4, and of related conventional color maps.
Figure 6 is a flow chart of a method to generate the media profile of Figure 4, in accordance to one embodiment of the present invention

There will now be described by way of example the best mode contemplated by the inventors for carrying out the invention. In the following description numerous specific details are set forth in order to provide a thorough understanding of the present invention. It will be apparent to one skilled in the art, that the present invention may be practiced without limitation to these specific details. In other instances, well known methods and structures have not been described in detail so as not to unnecessarily obscure the present invention.

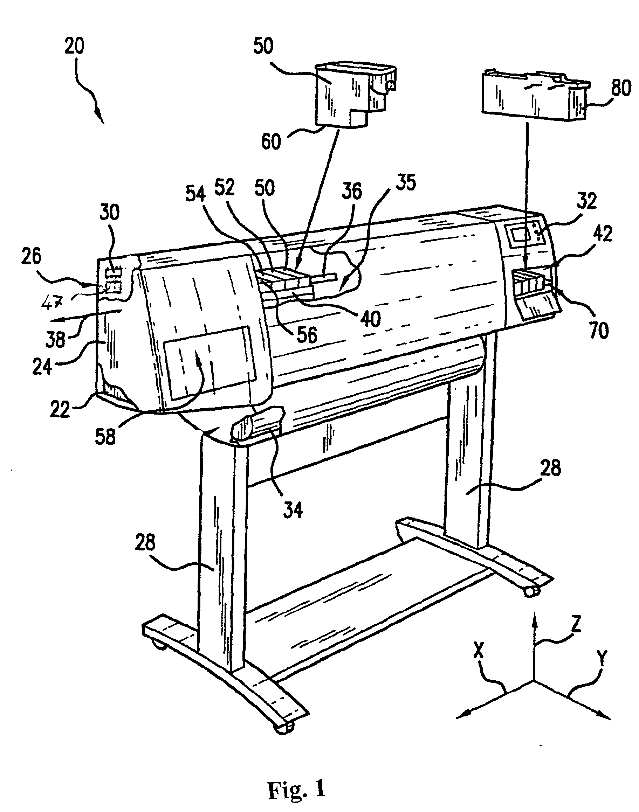

Figure 1 illustrates a first embodiment of an inkjet printing mechanism, here shown as an large format inkjet printer 20, constructed in accordance with the present invention, which may be used for printing conventional engineering and architectural drawings, as well as high quality poster-sized images, and the like, in an industrial, office, home or other environment. A variety of inkjet printing mechanisms are commercially available. For instance, some of the printing mechanisms that may embody the present invention include desk top printers, portable printing units, copiers, video printers, all-in-one devices, and facsimile machines, to name a few. For convenience the concepts of the present invention are illustrated in the environment of an inkjet printer 20.

While it is apparent that the printer components may vary from model to model, the typical large format inkjet printer 20 includes a chassis 22 surrounded by a housing or casing enclosure 24, typically of a plastic material, together forming a print assembly portion 26 of the printer 20. While it is apparent that the print assembly portion 26 may be supported by a desk or tabletop, it is preferred to support the print assembly portion 26 with a pair of leg assemblies 28. The printer 20 also has a printer controller, illustrated schematically as a microprocessor 30, that receives instructions from a host device, typically a computer, such as a personal computer or a computer aided drafting (CAD) computer system (not shown) and a memory 47. The memory 116 may comprise any one of or a combination of a number of memory devices, including both volatile and nonvolatile memory components. Volatile components are those that do not retain data values upon loss of power. Conversely, nonvolatile components retain data upon a loss of power. These volatile and nonvolatile components may include, for example, random access memory (RAM), read-only memory (ROM), hard disk drives, floppy disk drives, compact disk drives, tape drives, and other memory components. The printer controller 30 may also operate in response to user inputs provided through a key pad and status display portion 32, located on the exterior of the casing 24. A monitor coupled to the computer host may also be used to display visual information to an operator, such as the printer status or a particular program being run on the host computer. Personal and drafting computers, their input devices, such as a keyboard and/or a mouse device, and monitors are all well known to those skilled in the art.

A conventional print media handling system (not shown) may be used to advance a continuous sheet of print media 34 from a roll through a printzone 35. The print media may be any type of suitable sheet material, such as paper, poster board, fabric, transparencies, mylar, and the like, but for convenience, the illustrated embodiment is described using paper as the print medium. A carriage guide rod 36 is mounted to the chassis 22 to define a scanning axis 38, with the guide rod 36 slideably supporting an inkjet carriage 40 for travel back and forth, reciprocally, across the printzone 35. A conventional carriage drive motor (not shown) may be used to propel the carriage 40 in response to a control signal received from the controller 30. To provide carriage positional feedback information to controller 33, a conventional metallic encoder strip (not shown) may be extended along the length of the printzone 35 and over the servicing region 42. A conventional optical encoder reader may be mounted on the back surface of printhead carriage 40 to read positional information provided by the encoder strip, for example, as described in U.S. Patent No. 5,276,970, also assigned to Hewlett-Packard Company, the assignee of the present invention. The manner of providing positional feedback information via the encoder strip reader, may also be accomplished in a variety of ways known to those skilled in the art. Upon completion of printing an image, the carriage 40 may be used to drag a cutting mechanism across the final trailing portion of the media to sever the image from the remainder of the roll 34. Suitable cutter mechanisms are commercially available in DesignJet® 650C and 750C color printers. Of course, sheet severing may be accomplished in a variety of other ways known to those skilled in the art. Moreover, the illustrated inkjet printing mechanism may also be used for printing images on pre-cut sheets, rather than on media supplied in a roll 34.

In the printzone 35, the media sheet receives ink from an inkjet print cartridge, such as a black ink cartridge 50 and three monochrome color ink print cartridges 52, 54 and 56. The black ink cartridge 50 is illustrated herein as containing a pigment-based ink. For the purposes of illustration, color cartridges 52, 54 and 56 are described as each containing a dye-based ink of the colors yellow, magenta and cyan, respectively, although it is apparent that the color cartridges 52-56 may also contain pigment-based inks in some implementations. It is apparent that other types of inks may also be used in the cartridges 50-56, such as paraffin-based inks, as well as hybrid or composite inks having both dye and pigment characteristics. The illustrated printer 20 uses an "off-axis" ink delivery system, having main stationary reservoirs (not shown) for each ink (black, cyan, magenta, yellow) located in an ink supply region 58. In this off-axis system, the cartridges 50-56 may be replenished by ink conveyed through a conventional flexible tubing system (not shown) from the stationary main reservoirs, so only a small ink supply is propelled by carriage 40 across the printzone 35 which is located "off-axis" from the path of printhead travel. As used herein, the term "pen" or "cartridge" may also refer to replaceable printhead cartridges where each pen has a reservoir that carries the entire ink supply as the printhead reciprocates over the printzone.

The illustrated cartridges 50, 52, 54 and 56 have printheads 60, 62, 64 and 66, respectively, which selectively eject ink to from an image on a sheet of media 34 in the printzone 35. These inkjet printheads 60-66 have a large print swath, for instance about 20 to 25 millimetres (about one inch) wide or wider, although the printhead maintenance concepts described herein may also be applied to smaller inkjet printheads.

The printheads 60, 62, 64 and 66 each have an orifice plate with a plurality of nozzles formed therethrough in a manner well known to those skilled in the art. The nozzles of each printhead 60-66 are typically formed in at least one, but typically two linear arrays along the orifice plate. The illustrated printheads 60-66 are thermal inkjet printheads, although other types of printheads may be used, such as piezoelectric printheads. The thermal printheads 60-66 typically include a plurality of resistors which are associated with the nozzles. Upon energizing a selected resistor, a bubble of gas is formed which ejects a droplet of ink from the nozzle and onto a sheet of paper in the printzone 35 under the nozzle. The printhead resistors are selectively energized in response to firing command control signals delivered from the controller 30 to the printhead carriage 40.

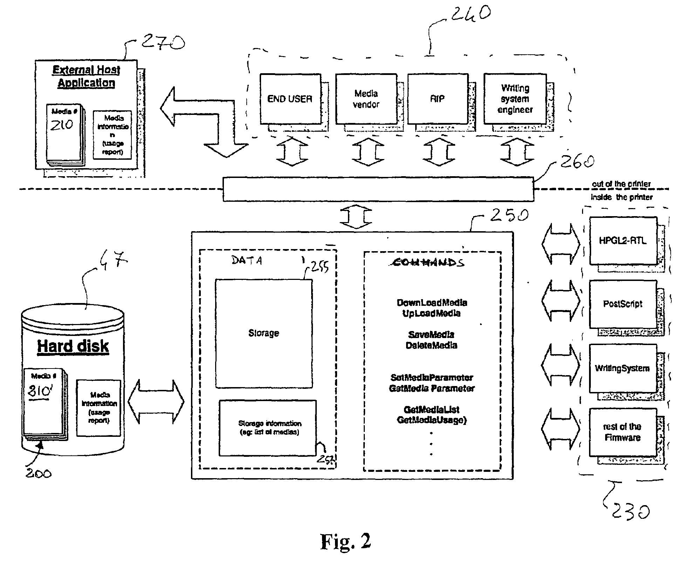

With reference to Figure 2, a media database 200 is a novel component of the printer firmware 230, stored in memory 47 of the printer 20, which keeps the information related to media types. This information enables the printer 20 to produce output on such media types with the highest possible quality.

The information related to media types are formalised in media profiles. A media profile 210 is a set of data required by the printing components of the printer 20 to print on a type of medium, so that it can achieve the desired output quality. The media database is then a collection of media profiles, each corresponding to a different media type.

Clients 240 are entities, like end-users of the printer, media vendors developing media to be used in connection with the printer, RIPs, or writing system engineers, which access the information in the database to carry out several operations via a command language.

The external interface 260 allows clients 240 outside the printer to access the database.

Commands, like read data from a media profile 210; write data to a media profile 210; copy a media profile 210; or enumerate available media profiles, are sent through the interface 260 to perform the available operations in the database. Having the ability to write the media profile 210 it allows to carry out the most relevant tasks: e.g. save a new media profile 210' in the printer 20 so that it is available further on; or attach a media profile 210' to a specific document, so that the profile is used only when printing that document

The data stream which includes the media profile is handed over to a parser 250 in the printer 20. The parser 250 extracts the different items which make up the definition and it put the data in the media database 200.

Preferably, statistics on usage of the different media profiles 210, i.e. the associated medium, are stored in memory 47 too, for providing printing usage reports at end-user request.

Once that a media profile 210' is stored into the database 200, it can be used by the printer 20 while performing its printing operations on the associated medium. At request of any of the firmware components, the parser is checking the availability of the profile in a file 257, containing a list of all the available profiles 210, then it loads the definition into a second temporary storage 255 to make it available to the firmware components 230, like HPGL2-RTL language interpreter, Postscript interpreter, writing system module, etc. to carry on with the printing process.

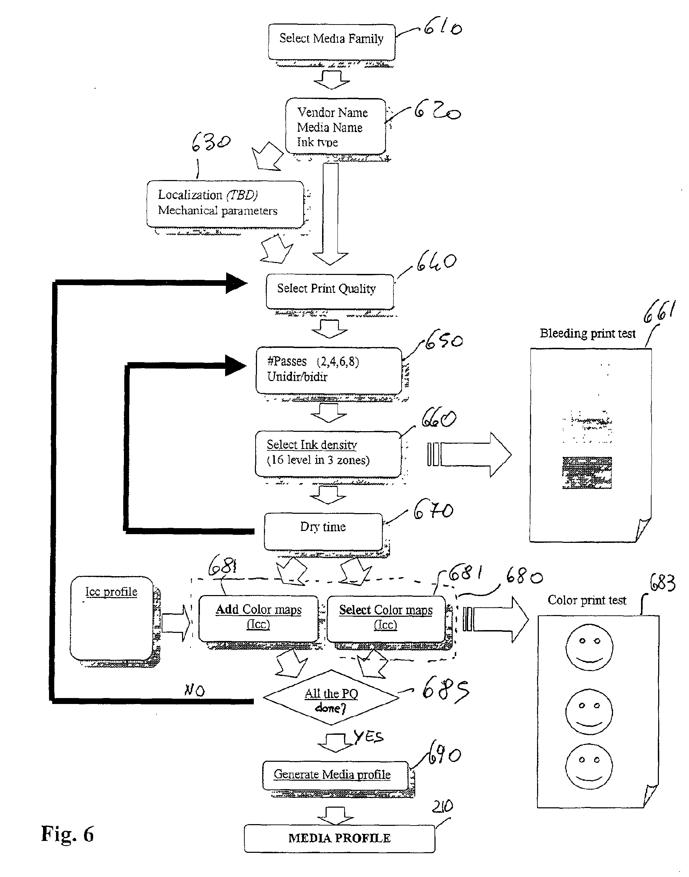

A media profile can be define by means of language commands passed to the media parser 250, via the interface 260, or more preferably, via an external application, e.g. a computer program described in more details with reference to Figure 6,

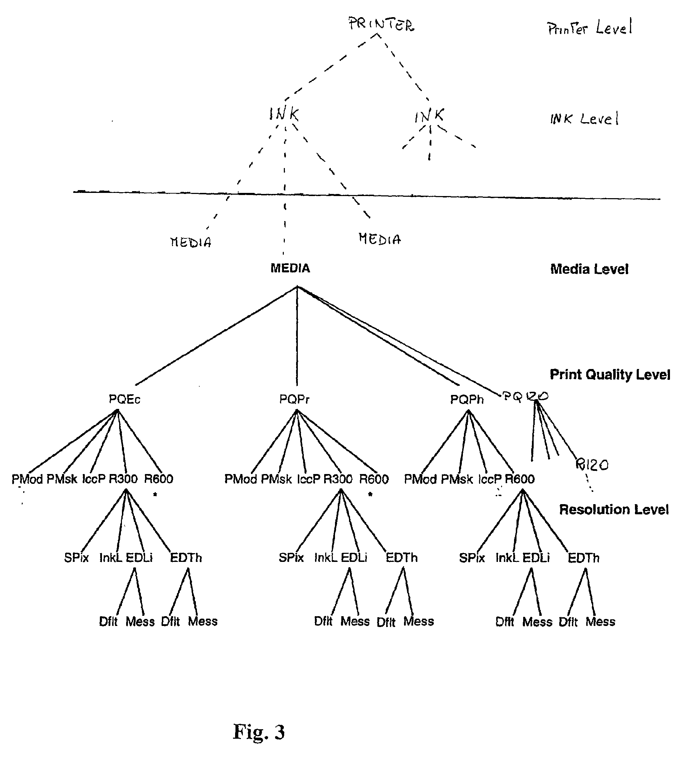

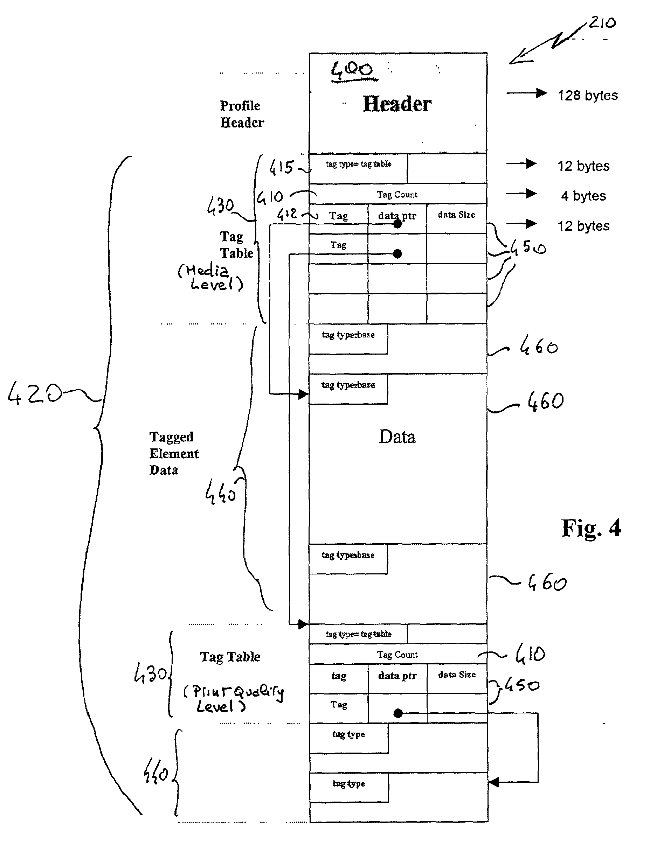

Turning now to Figures 3 and 4, the media profile structure will now be described.

The media data is organised in a tree structure. This data structure is based on a data organisation that describes how the ink drops shall be placed on the paper. The rest of the media data is attached to this structure.

With reference to Figure 3, at the root, the media level, there is all the information not related with the Print Quality. (e.g.: media name localisation, mechanical parameters as cutting enable or disable, etc. see Table 4 for a more detailed list)

Depending on the print quality some media parameters can have different values. These parameters belong to the print quality level. In this level there is mostly all the information related to the way the ink drops are placed onto the medium. Preferably, in accordance to the best mode, the number of print qualities is four but it can be any.

The lowest level is the swath format level. At that level there is information on how to place the dots depending on the print quality and the kind of plot to print.

Preferably two more higher levels can be added to the above media data structure.

All the media data always depend on the ink type, then all the definitions for a specific ink can be grouped, identifying an ink level. Different media definitions can be attached below an ink definition. Then, a printer type can be the new root of the whole tree structure. It could group definitions for parameters, depending only on the printer type.

Turning now to Fig 4, the media data are organised in media profiles 210; there is one profile for any different medium, which can be used in the printer.

The media profile 210 is so structured:

**Profile Header** (or logical data) 400: This is the minimum data required to create a media profile. Basically it contains the name of the media and the access permissions, i.e. if the profile can be read, modified, deleted by which clients 240. The media header is not dependent on the type of printer platform.

**Profile body** (or data on the physical characteristic of the medium) 420: These parameters are totally dependent on the mechanics, the pens, the ink, etc., in other words, on the specific printer platform. The profile body tries to match the tree structure of Figure 3.

The structure with fixed fields has been chosen, so that both a downloader software 270 and the parser 250 can be simple. With the simple structure, the parser 250 only needs to read the 8-byte with the command code and size and then the additional data if it exists.

Each type of printer may decide the way the media parameters are structured. In the preferred embodiment, a tree structure is used: the media as the root, a print quality level and a swath resolution level.

As mentioned before the profile body contains most of, and preferably all, the parameters that are dependent on the printer platform. It means all the information needed for the printer to be able to print on a given media: print modes, color data, ink data, mechanical information, etc.

According to the preferred embodiment, the media profile 210 comprises the following elements: the header 400, one or more tag counts 410 (shown only 2), one or more tag tables 430 (shown only 2) and the tag data 440, in the order as shown in Figure 4, as a single file.

Each tag table 430 contains tags 412 identifying the parameters associated to one level as of tree in Figure 3, and the associated tagged data 460 contains the value for the respective parameter. As it will be described in greater detail in the following, each parameter (or tag 412) can accept values according to a corresponding data structure. This data structure is called tag type 415 and in other words it identifies how the data has been encoded in that parameter.

Table 1 below contains a list of possible values which can be stored in the profile header where: ulnt8Number represents a generic unsigned 1 byte/8 bit quantity; ulnt16Number represents a generic unsigned 2 byte/16 bit quantity; ulnt32Number represents a generic unsigned 4 byte/32 bit quantity; ASCII string represents a sequence of bytes, each containing a graphic character from ISO 646, the last character in the string being a NULL (character "/0").

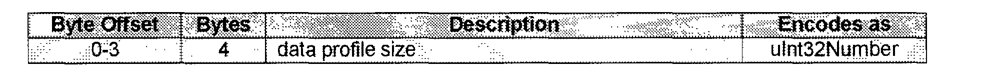

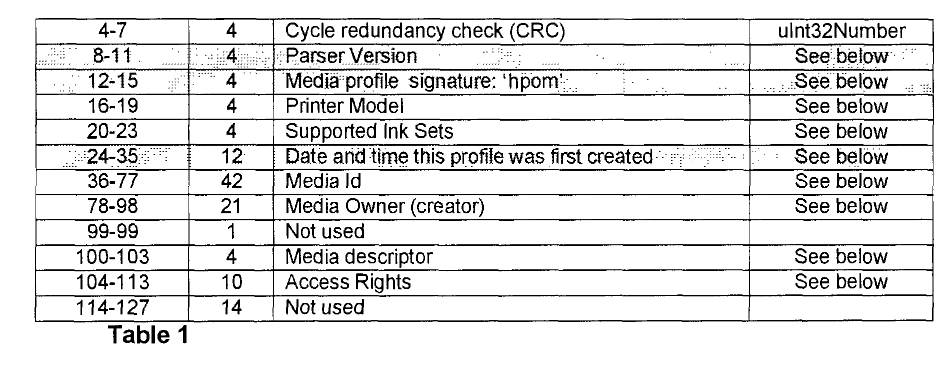

"Data profile size" contains the total size of the profile in bytes, encoded as an ulnt32Number.
"CRC": This CRC is applied to all the media profile and it is encoded as an ulnt32Number
"Media profile signature" contains the signature of the profile registration authority, who control if the media profile is correct and issue the profile for subsequent installation in the printers. In this example, hpom stands for: Hewlett-Packard ® Open Media
"Printer model" contains the name of the platform which the profile has been created for.
"Supported ink set" contains the kind of ink set which is supported by the profile, i.e. required by the media. In this embodiment only one ink set is supported for media profile. In case that the same media definition is suitable for more than one ink, two media profiles will be needed, with different values contained in this field.
"Date and time" contains a 12 byte value representation of the time and date of creation of the profile, to avoid the replacement of an newer version of a profile with an older version. The actual values are encoded as 16 bit unsigned integers.
"Media Id" contains the name given by the creator that defines the media. It is the media identifier and it doesn't depend on the current language.

The media name is composed by a Media vendor portion (ASCII string): e.g.: HP ®, 3M ®, etc.; and a media name portion (ASCII string): e.g.: Coated paper, canvas, glossy paper, etc.
"Media Owner" contains the name of owner of a media definition which is the creator of the profile who defines all the parameters. The creator may often be the same media vendor (ASCII string)
"Media device descriptor" contains information on the level of testing of the media, e.g. media and media profile tested by the printer manufacturer, media and
media profile tested by third parties, media tested by third parties and validated by the printer manufacturer.
"Access Rights" contains access rights, as per Table 3, for each of the defined access types, listed in Table 2. Whatever action is done over a media profile, it is always checked the access rights of the users. If a user wants to perform an action over a media but doesn't have the right to it, then his request is not fulfil and will get a message like: "access not allowed".

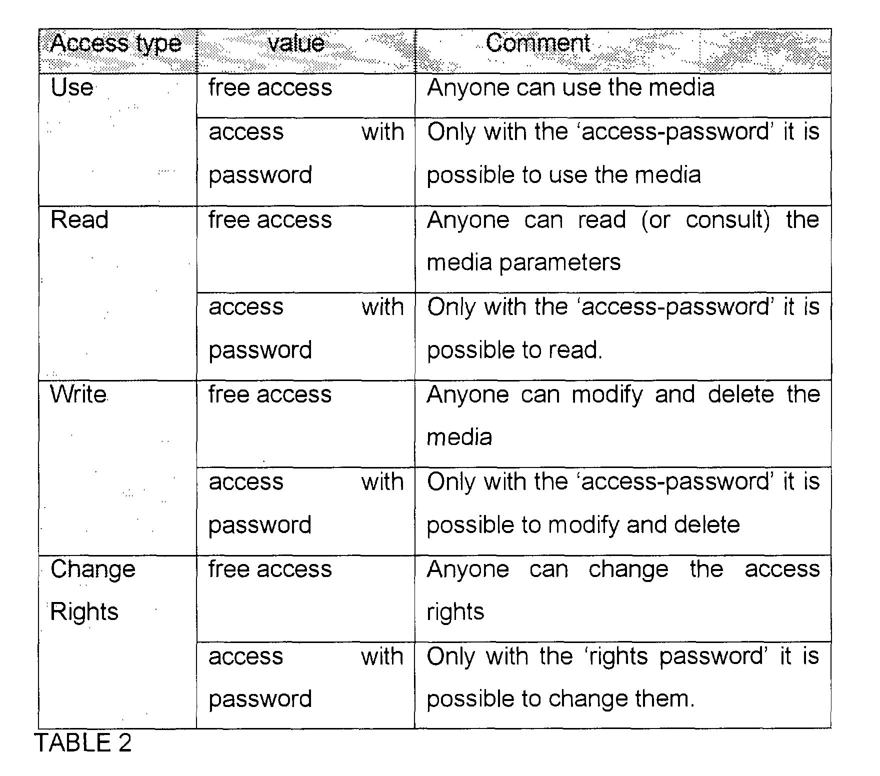

The encoding of this parameter is such that the access type with "need password" is set to 1 and with "free access" is set to 0:

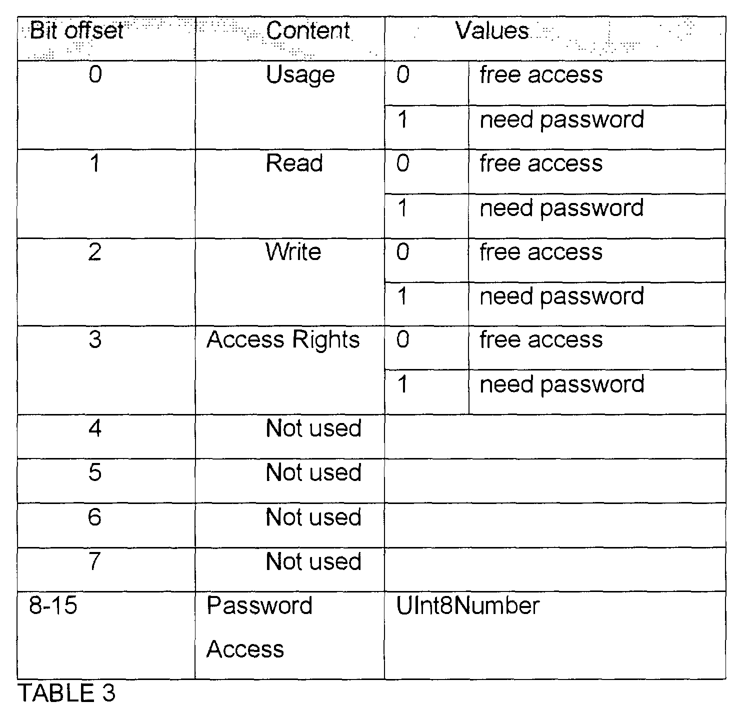

The tag table 430 acts as a table of contents for the tags 450 and tag element data 460 in the profiles. The first four bytes contain a count 410 of the number of tags in the table itself. The tags within the table are not required to be in any particular order. Even a tag table, which is part of the basic media profile structure, is considered as another tag type. Then a tag type structure 415 specific for tag table will be added to specify that a tag table structure follows.

The main reason of having a tag type for the tag table is due to the media tree structure, so to allow that there can be more than one tag table. When parsing a media profile the tag type base shows the type of structure of the following data and a tag table does not have to be a special case. So all the tag tables including the first one has a tag type. The profile tags and profile tag types have been registered to ensure that all the profile data is uniquely defined. Usage of unregistered profile tags and profile tag types will cause an error when passing the rpofile to parser 250. The number of tags in the table encoded in the tag count 410 as an uInt32Number.

### Tag Data Requirements

In the media profile all tag data are required to start on a 4-byte boundary (relative to the start of the profile header) so that a tag starting with a 32 bit value will be properly aligned without tag handler in the parser 250 needing to know the contents of the tag. This means that the low 2 bits of the beginning offset must be 0. The element size should be for actual data and must not include padding at the end of the tag data. The header 400 is the first element in the file structure encompassing the first 128 bytes. This is immediately followed by the root tag table 430. Tagged data elements 440 make up the rest of the file structures. There may be any number of tags and no particular order is required for the data of the tags. Each tag may have any size (up to the limit imposed by the 32 bit offsets).

Tag type 415 identifies the type of the structure of the data of the associated tag.

All tag types have as their first four bytes (0-3) a tag signature (a 4 byte sequence) to identify to profile readers what kind of data is contained within a tag.

The second four bytes (8-11) are reserved for future expansion and are set to 0 in this embodiment.

Several different tags and tag types has been defined so that the tree structure of Fig 3 can be easily reproduced into a media profile.

In Table 4 a list of tags (or media parameters) is disclosed. In column 1 an exemplary list of different tags is given. In a same row several different tags can be listed divided by ":". The skilled in the art may appreciate how the last tag, listed to the left end of each cell of column 1, identifies a leaf of the tree of Figure 3, i.e. a tag associated to data 460, thus being a tag type with a structure depending on the data contained therein; while the other tag type(s), if any, listed in the same cell identify(ies) node(s) of the tree of Figure 6, i.e. tag type(s) associated to a tag table, thus being a "tag table" tag type.

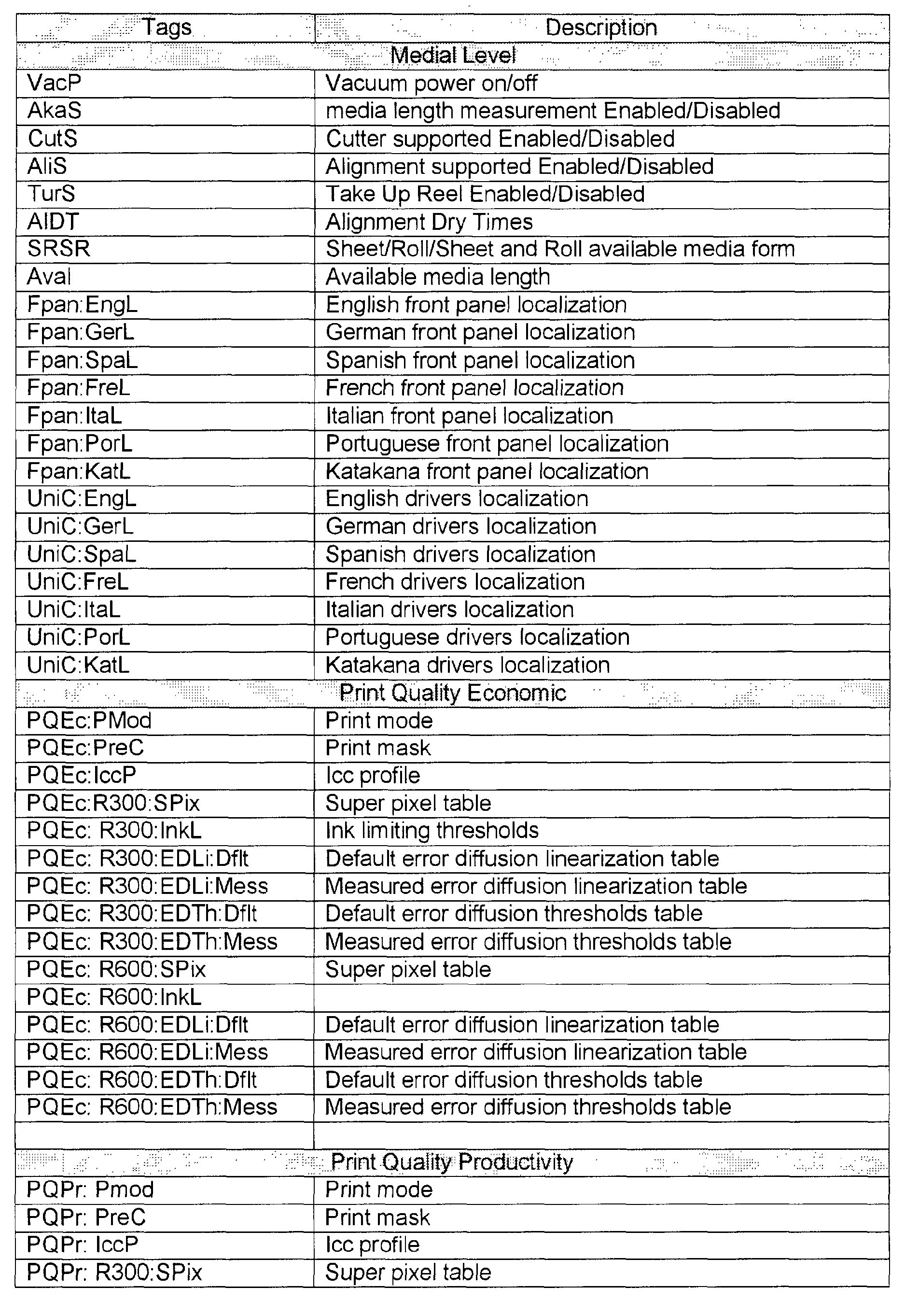

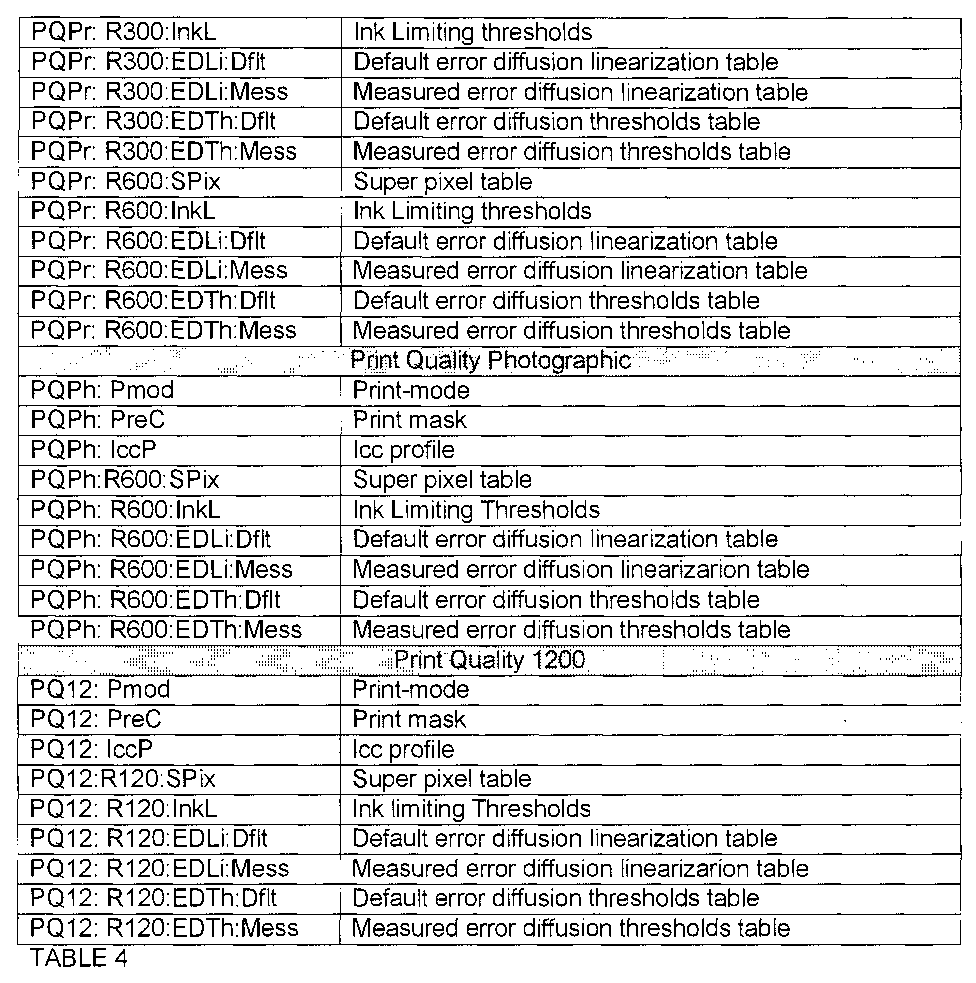

The data field 460 of the media profile generally contains directly, in a given tag table structure, all the information that shall be used, by firmware components 270, to improve the output quality of the printer 20 on a new media, such as:
binary values enabling or disabling a particular feature of the printer, e.g. the vacuum, or the cutter;
text, e.g. to introduce localised messages displayed on the front panel of the printer; structures, e.g. for defining a print mode conventionally containing the number of passes, the carriage speed, the media advance etc.;
tables, e.g. a conventional error diffusion linearization table or a conventional superpixel table (e.g. as described in US patent no. 5,485,180);
masks, e.g. conventional print masks; or
numbers, e.g. ink limiting thresholds.

However in case of color maps these have not been directly embedded into the media profile. The skilled in the art may appreciate that it is easier to create the media profile without the need of embed the associated color maps into, because known color profiling tools already produce ICC profiles and color profiles created in this way for each media can be easily re-used by other applications of the printer, or of the attached computer (if any).

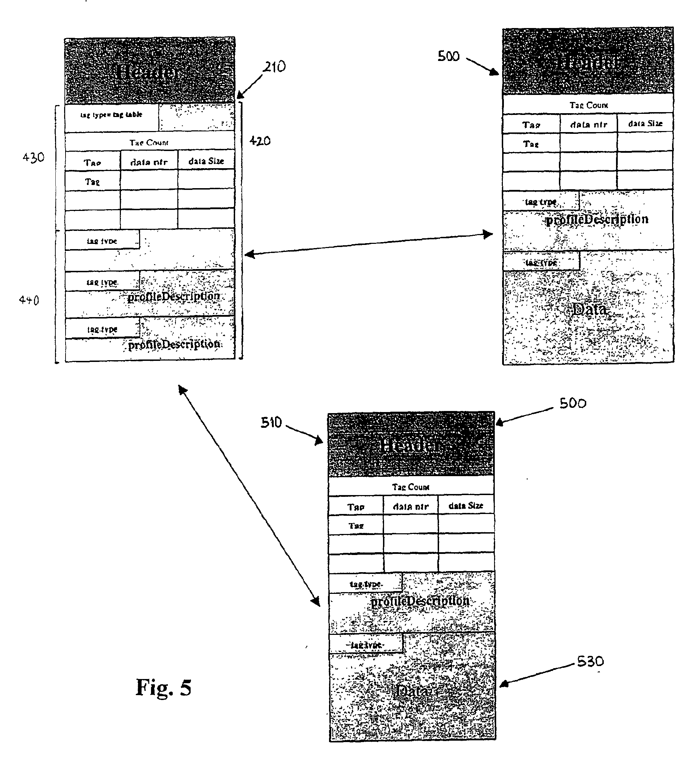

In this case a conventional structure, similar to the one employed by to define a media profile, called color or ICC profile 500 is employed as shown in Fig. 5. This means that the whole media definition will be compose by the media profile plus the associated ICC profiles.

A conventional ICC profile contains an header 510, having structure and parameters similar to the media header 400. The color maps is stored in the data portion 530 of the ICC profile. It is critical to ensure that the color profiles are associated with the right print modes. This is achieved through the textual description 520 included in ICC profiles. In the media profile, the data associated to each ICC profile tag contain the same textual description of the associated ICC profile. Any two color profiles 500 associated with the media profile must then have different description strings.

There will be now described how a client 240 can define a media profile in accordance to a preferred embodiment.

When creating a media profile 210, it is relevant to separate the following tasks:
define the media physical parameters;
create the print mode parameters: this is the information the printer writing system module requires to define the placement of dots;
create the color profiles: this is the information which models the appearance of printed colors for a given print mode;
associate the print modes with the color profiles: a media profile comprises a variable number of color profiles and print modes. It is necessary to associate each print mode with its appropriate color profile.

### Definition of the media physical parameters

Most of these parameters -such as media, manufacturer, weight- are easily determined for the media. Some of them may require some experimentation such as the parameters which control the media loading procedure (e.g. vacuum power).

So, this task is quite straightforward because for the most part it involves filling in some fields of the media profile.

### Creation of the print modes

The print mode is a set of data which defines the placement of dots. Although this specification does not intend to describe a conventional process for creating the print modes, it is worth noting that: defining the print modes requires intensive experimentation to ensure that the print quality is good under all supported conditions; the number of print modes for a media is variable. The media profile supports a tree-like structure which makes it easier to define new print modes by varying other existing ones -for example, a user could create a faster mode with lower print quality just incrementing the carriage speed. This task can become quite time consuming, because it requires multiple trial and error loops and assistance from automated tools is limited.

### Creation of color profiles

The last step requires to print a color target using the previously defined print mode, measure the colors on it and create an ICC profile using one of the profile-creation tools available in the market. This step, although relatively automatic, may require further tweaking of the profiles in order to produce best results. Not all the print modes will have optimal color profiles -in order to save time, if several print modes produce similar colors they could share the same profile. The creator of the media profile must associate each print mode with the most appropriate ICC profile.

### Associating the print modes with the right color profiles

If the color profiles and print modes are produced by different processes, it will be necessary a manual step which associates a color profile to each print mode. The number of color profiles and print modes is variable. The creator of the media profile decides which print modes are required, and which ones will have an optimized color profile. Other print modes may use the same profile.

In order to use a new media on a printer, end-users must put the associated media profile and its color profiles in the printer. The process will require the use of a software tool 270 running in a computer. The tool will pick all the elements which make up the definition and organise them in the format recognised by the printer, e.g. a software program as described below, with reference to Figure 6.

Alternatively, a media profile can be sent to the printer to be to be applied to a single document -or a set of pages within a document. This is as if the media profile is embedded in the document file.

These media profiles are temporary because they only remain in the storage 255 of the media parser 250 as long as the print job they are associated with exists and then are discarded.

The skilled in the art may appreciate that these temporary definitions will be less complex than the full media profiles for two reasons: (i) the definition only needs to contain a single print mode; (ii) the application which produces the print job usually leaves fewer control parameters up to the printer itself -for example, a software RIP may carry out halftoning, so that the parameters of the halftoning algorithm do not have to be specified in the media profile. The media profile may be incomplete, leaving certain fields to be default values

To put a media profile within a print job, the following commands can be issued in PJL
@PJL START JOB = "job name"<CR>
@PJL ENTER LANGUAGE=HPOM<CR>
<...media commands as defined in the following >
<Esc>%-12345X<CR>
@PJL END JOB

These PJL instructions ensure that the commands of the media language are handed over to the media parser 250, as if it was the data for a print job.

Temporary media profiles have the same scope as the PJL variables. This means that the media profile will apply to subsequent jobs until a new media profile is found or until a PJL RESET condition -which occurs at the end of the job.

Preferably several definitions can stay within the print job, more preferably up to one for each page.

More preferably printed pages can be mixed with temporary media profiles in the same print job. The temporary media profile will be applied to the next printed pages, until another temporary media profile is sent or the job ends. This use model can be used by RIP's which put their own media profiles within the print job stream.

Typically, permanent media profiles can be mixed with printed pages. These definitions will not be applied to the printed pages, but these will remain within the printer for future use.

In accordance to one embodiment, some restrictions must be considered when downloading media profiles:
- temporary media profiles must remain in the printer until the print job which uses them has disappeared from the printer. There can be an arbitrary number of temporary profiles in the printer;
- a permanent media profile can overwrite an existing one. The media database imposes policies and restrictions to this operation;
- if a permanent media profile is being used by a print job, it cannot be replaced by a new one. The print jobs which use the old media profile must be removed from the print job queue. If some of the jobs still have to be printed, the process of downloading a media must wait; and
- while a media is being downloaded, no new print jobs must be accepted.

The media database interface ensures that these restrictions are met.

In the following cases, the media profile download will be interrupted and any remaining data removed from the system:
- failure on I/O
- user cancelling the operation.

Generally in case of downloading, the sequence of commands is the following:
- first, either the 'perm' or 'temp' command -the second one is implicit- to select either a permanent of temporary media;
- if the media requires a password, a 'pswd' command;
- next, a 'omsp' command, which indicates it is starting to download a media profile. This command is followed by the media profile data;
- next, as many 'iccp' commands as the number of ICC color profiles which are associated with the media profile. Each command is followed by the ICC profile data;
- finally, the 'endm' command, which indicates all the information for the media has been sent.

A new media profile can be sent after the first one. The downloading finishes when an exit command is sent.

This is the list of 4-byte command codes which can be used to download the media profile. These commands must be placed in the printer data stream in accordance to the above description.
**pswd**= password
Size: any

Data: a zero-terminated string which will be passed to the parser as password. Any characters behind the final zero are ignored. The password should match the one in the media profile, if any. Some media profiles may be restricted to clients which know the password.
**Perm**= download permanent media profile
Size: 0
Data: no data.

This command indicates the parser that the media being downloaded is to be kept permanently in the printer. By default, the media downloaded will be temporal -this is to make it easier for the simplest use models: RIP vendors which have to download a temporary media with each print job.
**temp**= download temporary media profile
Size: 0
Data: no data

This command indicates that the media being downloaded only applies to the current print job.
**omsp**= media profile
Size: any (greater than 128)
Data: the media profile binary data as described in the media profile specification
**iccp**= ICC profile
Size: any (greater than 128)
Data: an ICC profile as specified above".
**endm**= end definition of media
Size: 0
Data: no data
Indicates that all the information for the current media profile has been sent.
**abrt**= cancel media downloading
Size: 0
Data: no data
Ignore all the data sent for the current data definition.
**dele**= erase an media profile
Size: size of the media ID
Data: a media ID

The media profile is deleted and all the ICC profiles associated are deleted as well.

Turning to Fig. 6, a preferred method to define media profile will now be described. Preferably this method will be adopted by media vendor or any other client 240 having a need to define a media profile, having a limited knowledge on dot placement and color management technology.

The method, which is preferably carried out by a software program 270 external to the printer 20, starts at step 610 when the media family is select by the program user (creator in the following) from a list of choices, e.g. economy, coated, glossy and special, ordered from media which absorb more ink to media which absorb less ink. This first selection has the goal of setting some media parameters with default values. Depending on the chosen media family default values for a number of parameters will be automatically added to the profile, or it modifies the future options given by the program to the creator. For instance the media family will determine that only a sub range of the ink density range will be made available to the user for his selection, at step 660

At step 620, via the program user interface, the creator defines: the media Identifier (vendor + media name) and the ink type.

The program fills in the rest of the media profile header:
Profile size
Profile CRC
parser version
media profile signature
Media definition creation data
Printer model
Media Owner (creator): from the media Id vendor
Access Rights
Media device description

At step 630, via the user interface, the creator fills in all the data which are not dependent on the print quality (media level):

String localisation. If a media profile doesn't have any localisation, the default value returned is the media identification.

Mechanical parameters, such us vacuum power on/off or cutter enabled/disabled.

At step 640 the creator selects which print quality wants to define first.

Preferably the maximum number of user-definable print quality is 3, namely fast, normal and best. Preferably, the creator can define one print quality like another print quality. (e.g. normal = fast)

In the next steps user defines the print quality level parameters for the selected print quality, namely print modes, ink density, dry times, and color maps.

At step 650 print modes are defined. Since the end-user of the printer can select from the front panel the print quality (e.g. fast, normal or best) and one of the associated print resolutions (e.g. 300x300 dpi, 600x600 dpi, or 1200x1200 dpi), more than one print mode can be defined for a given print quality by repeating steps 650, 660 and 670. Then, via the user interface, creator selects the number of passes among 2,4,6,8, or 10 for a first print mode (lets say to print at a resolution of 300x300), then he chooses between unidirectional or bi-directional print mode.

At step 660 ink density, i.e. the thresholds for ink limiting, is set for said first print mode. Via the user interface the creator selects among 16 different levels of ink density. This 16 levels are divided in 3 groups and preferably user can select among the levels of one group of density only, in accordance with the media family chosen at step 610.
- Low Density:: Level 1 to Level 4 for economy media
- Medium Density:: Level 5 to Level 12 for coated and glossy media
- High Density:: Level 13 to Level 16 for special media

An ink density print test (bleed plot) 661 is preferably used to help the selection. More preferably it is printed a test pattern containing only some of the level of the selected density, typically only the one(s) that the user selects (e.g. 7, 10, 11, 12), and starting from the lowest density.

At step 670, a dry time for plot printed with said print mode is defined. Such dry time will be applied at the end of the plot.

Steps 650, 660, and 670 can now be repeated if more print modes are required for that print quality. Typically, a fast quality mode has a print mode to print at 300x300 dpi and/or another to print at 600x600 dpi; a normal quality mode has print modes to print at 300x300 dpi and/or at 600x600 dpi; and a best quality mode has print modes to print at 600x600 dpi and/or at 1200x1200 dpi

At step 680: one or more color maps are assigned to the printmodes defined above for a given print quality. From the user interface, creator can chose to select (step 681) the color map(s) from a set of color maps available in the program. The selection is based on the visual inspection of a color test print 683 (here shown in varying degrees of gray) which applies the different color maps that the tool provides to a given pattern. Otherwise creator can add (step 682) an ICC profile independently generated in conventional ways.

Test 685 checks if all the 3 print qualities have been generated. If not, control passes to step 640. In the affirmative, at step 690 all the data introduced or selected by the created are used by the program to generate a media profile 210, having the appropriate, syntactically correct, header 400, tag tables 430 and tagged element data 440 and the associated ICC profile(s) 500.

The generated media profile, can now be tested by the creator, passing it as a temporary profile to the parser 250 of the printer 20.

In a preferred embodiment, these media-vendor generated media profiles for new media can be made available over the internet, e.g. stored in a readable medium such as a server hard disk, for subsequent downloading. End-users can decide which new media profile will download to the media database 200 of their printer 20. In addition a set of generated media profiles can be stored on a computer readable medium, such as a computer diskette or a CD-ROM or similar computer readable media susceptible of being physically distributed to end-user for an on-demand installation. The skilled in the art may appreciate how this avoids the need of issuing a modified firmware for such printers or the need of connecting the printer to an external RIP, capable of recognising the new media.

## Claims

1. A method to improve image quality in a printing device, having a plurality of firmware components, comprising the steps of
storing in a memory means of the printing device at least a medium definition corresponding to a first medium, in a format which structures data about said first medium;
using the data contained in said medium definition corresponding to said first media when printing onto said first media.

2. A method as claimed in claim1, wherein said step of using the data, comprises the steps of, at request of a firmware component of said plurality of firmware components, parsing said data and returning the parsed data to the requesting firmware component.

3. A method as claimed in claim 1 or 2, wherein said medium definition contains data regarding mechanics characteristics associated to said first medium.

4. A method as claimed in any preceding claims, wherein said medium definition contains data regarding how ink is placed on said first medium.

5. A method as claimed in claim 4 wherein said data regard one or more of the items of the following lists: print mode, print mask, color map, ink density, dry time, printing resolution.

6. A downloadable media profile for a first medium containing values for a plurality of parameters characterising how a printing device prints on said first medium.

7. A profile as claimed in claim 6, which is downloadable by a user of the printing device into said printing device.

8. A profile as claimed in claims 6 or 7 wherein said plurality of parameters contains data on how ink drops are placed onto said first medium.

9. A profile as claimed in any of claims 6 to 8, further containing values for a plurality of parameters unrelated to the physical characteristic of said medium.

10. A profile as claimed in claim 8, wherein said list of parameters comprise one or more of the following list of parameters: print mode, print mask, color map, ink limiting threshold, dry time, resolution.

11. A profile as claimed in any of claims 6 to 10, wherein the value for a color map parameter identifies an independent color profile containing a color map for such profile.

12. A profile as claimed in claim 11, wherein such color profile is an ICC profile.

13. A printing device comprising a displaying means (32), a downloaded media profile (210) for a first medium as claimed in any of claims 6 to 10, firmware components (230) for managing the printing process, passing means (250), responsive to said firmware components (230), for passing data from said profile (210) to said firmware components (230) when printing on said first media.

14. A printing device as claimed in claim 13, wherein said displaying means (32) display a media identifier, comprised in said media profile (210), univocally identifying said downloaded media profile (210).

15. A computer readable medium, containing a downloadable media profile as claimed in any of claims 6 to 12.
